# EUROPEAN PATENT APPLICATION

(11) **EP 3 917 197 A1**
(43) Date of publication of application: **01.12.2021**
(21) Application number: 20746011.4
(22) Date of filing: 13.01.2020
(51) Int. Cl.: H04W 24/02, H04W 4/02

(54) **COMMUNICATION METHOD AND APPARATUS FOR TERMINAL AND SERVER**

(30) Priority: 21.01.2019 CN 201910053642
(71) Applicant: ALIBABA GROUP HOLDING LIMITED, George Town, Grand Cayman (KY)
(72) Inventor: TAO, Zhen, Hangzhou, Zhejiang 311121 (CN); YU, Xiaobo, Hangzhou, Zhejiang 311121 (CN)
(74) Representative: Finnegan Europe LLP
(86) International application number: PCT/CN2020/071688
(87) International publication number: WO 2020/151514

(57) **Abstract**

A method and an apparatus for communication between a terminal and a server are provided in embodiments of the present application. The method for communicating between a terminal and a server includes: sending, by the terminal, a first message to the server, the first message including command information, the command information including first state information, and the first state information including at least one of mobile attribute information, moving state information, mobile state start information, stationary state start information, and moving direction state information; and receiving, by the terminal, a second message sent by the server, wherein the second message is used to confirm at least one type of first state information in the command information. In the embodiments of the present application, the server can timely obtain the state information related to mobility of the terminal device, so that the server can adopt a corresponding network scheduling strategy when necessary, thus avoiding wasting network resources and improving the interaction efficiency between the terminal and the server.

## Description

The present application claims priority to Chinese Patent Application No. 201910053642.0 filed on January 21, 2019 and entitled "METHOD AND APPARATUS FOR COMMUNICATION BETWEEN TERMINAL AND SERVER," which is incorporated herein by reference in its entirety.

### Technical Field

The present application relates to the field of communication technologies, and in particular, to a method and an apparatus for communication between a terminal and a server.

### Background

The Internet of Things technology is the third information technological revolution after computers and the Internet. It has advantages of timeliness and interactivity, and has been widely used in various fields such as urban management, digital homes, positioning and navigation, logistics management, and security systems. LoRa is an ultra-long distance transmission solution based on the spread spectrum technology in the Internet of Things, and has characteristics such as long transmission distance, low power consumption, multiple nodes, and low cost. LoRaWAN (LoRa Wide Area Network) is a wide area network based on the LoRa physical layer technology. In the present invention, all terminals are considered as LoRaWAN terminals by default with no exception. LoRaWAN may also refer to a LoRaWAN protocol formulated by the LoRa Alliance.

In existing data transmission methods, a LoRa network usually includes a terminal, a base station, and a server.

In the prior art, a server considers mobility information of a terminal in some resource scheduling mechanisms. For example, in an Adaptive data rate (ADR) mechanism, if a terminal device is mobile, it is not recommended to use the ADR mechanism, but the terminal device's own data rate adjustment strategy is adopted.

However, in the prior art, a server side cannot know mobility-related information of the terminal, such that the server cannot timely adopt corresponding network scheduling strategies according to changes in a mobility-related state of the terminal.

### Summary of the Invention

In view of the above problems, embodiments of the present application are proposed to provide a method and an apparatus for communication between a terminal and a server for overcoming the above problems or at least partially solving the above problems.

In order to solve the above problems, a method for communication between a terminal and a server is disclosed in an embodiment of the present application, including:
sending, by the terminal, a first message to the server, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
receiving, by the terminal, a second message sent by the server, wherein the second message is used to confirm the at least one type of first state information in the command information.

Preferably, the method further includes that:
the first state information further includes time information about the upcoming transition to a stationary state and time information about the upcoming transition to a mobile state.

Preferably, the method further includes that:
the command information may be included in a data frame overhead.

Preferably, the method further includes that:
the command information may be included in an optional field of a data frame.

Preferably, the method further includes that:
the command information may be unencrypted.

A method for communication between a terminal and a server is further disclosed in an embodiment of the present application, including:
receiving, by the server, a first message sent by the terminal, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
sending, by the server, a second message to the terminal, wherein the second message is used to confirm the at least one type of first state information in the command information.

Preferably, the method further includes that:
the command information further includes time information about the upcoming transition to stationary and time information about the upcoming transition to moving.

Preferably, the server receives the first message sent by the terminal, the command information includes the first state information, and the method further includes:
updating, by the server, corresponding second state information according to the first state information, wherein the second state information is used for the server to perform a network scheduling operation.

Preferably, the method further includes that:
the command information may be included in a data frame overhead.

Preferably, the method further includes that:
the command information may be included in an optional field of a data frame.

Preferably, the method further includes that:
the command information may be unencrypted.

A terminal is further disclosed in an embodiment of the present application, including:
a first sending module configured to send a first message to the server, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
a first receiving module configured to receive a second message sent by the server, wherein the second message is used to confirm the at least one type of first state information in the command information.

Preferably, the terminal further includes:
the command information further includes time information about the upcoming transition to a stationary state and time information about the upcoming transition to a mobile state.

Preferably, the terminal further includes:
the command information may be included in a data frame overhead.

Preferably, the terminal further includes:
the command information may be included in an optional field of a data frame.

Preferably, the terminal further includes:
the command information may be unencrypted.

A server is further disclosed in an embodiment of the present application, including:
a second receiving module configured to receive a first message sent by the terminal, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
a second sending module configured to send a second message, wherein the second message is used to confirm the at least one type of first state information in the command information.

Preferably, the server further includes that:
the command information further includes time information about the upcoming transition to a stationary state and time information about the upcoming transition to a mobile state.

Preferably, the server further includes:
a processing module configured for the server to update corresponding second state information according to the first state information in the first message after the server receives the first message sent by the terminal, wherein the second state information is used for the server to perform a network scheduling operation.

Preferably, the server further includes that:
the command information may be included in a data frame overhead.

Preferably, the server further includes that:
the command information may be included in an optional field of a data frame.

Preferably, the server further includes that:
the command information may be unencrypted.

An apparatus is further disclosed in an embodiment of the present application, including:
one or more processors; and
one or more machine-readable media having instructions stored thereon, wherein the instructions, when executed by the one or more processors, cause the apparatus to perform one or more of the methods described above.

One or more machine-readable media having instructions stored thereon are further disclosed in an embodiment of the present application, wherein the instructions, when executed by one or more processors, cause an apparatus to perform one or more of the methods described above.

The embodiments of the present application include the following advantages:
In the embodiments of the present application, the server can timely obtain the state information related to mobility of the terminal device, so that the server can adopt a corresponding network scheduling strategy when necessary, thus avoiding wasting network resources and improving the interaction efficiency between the terminal and the server.

### Brief Description of the Drawings

FIG. 1 is a flow chart of Embodiment 1 of a method for communication between a terminal and a server according to the present application;
FIG. 2 is a flow chart of Embodiment 2 of a method for communication between a terminal and a server according to the present application;
FIG. 3 is a schematic diagram of a payload part of a terminal mobility indication command according to the present application;
FIG. 4 is an apparatus diagram of Embodiment 3 of a terminal according to the present application; and
FIG. 5 is an apparatus diagram of Embodiment 4 of a server according to the present application.

### Detailed Description

In order to make the above objectives, features, and advantages of the present application more obvious and understandable, the present application will be further described in detail below with reference to the accompanying drawings and specific implementations.

A LoRa network is composed of a terminal node, a base station node, and a server. The terminal has a LoRa network connection capability and accesses the LoRa network. According to different application scenarios where the LoRa network is deployed, the terminal may include different electronic devices. For example, when the LoRa network is applied to city management, the terminal may include a smart meter; when the LoRa network is applied to a digital home, the terminal may include various smart home appliances, and so on.

The base station, also referred to as a gateway or concentrator in the LoRa network, has the function of wireless connection convergence, including providing the terminal with an access to the LoRa network, forwarding data from the server or the terminal, and realizing data exchange between the terminal and the server. Of course, the base station can also exchange data with another base station within a signal coverage area of the base station by transmitting wireless frames.

The server may include one server or a server cluster for performing service processing according to data obtained from the base station or the terminal and controlling a working mode and a working state of the base station or the terminal.

One of core concepts of the embodiments of the present application is that a terminal informs a server of corresponding mobility state information of the terminal through Medium Access Control (MAC) command information or other forms of uplink notification information. The server selects a corresponding network scheduling strategy according to the received different terminal mobility state information.

A process of information synchronization is introduced first below from the perspective of a terminal.

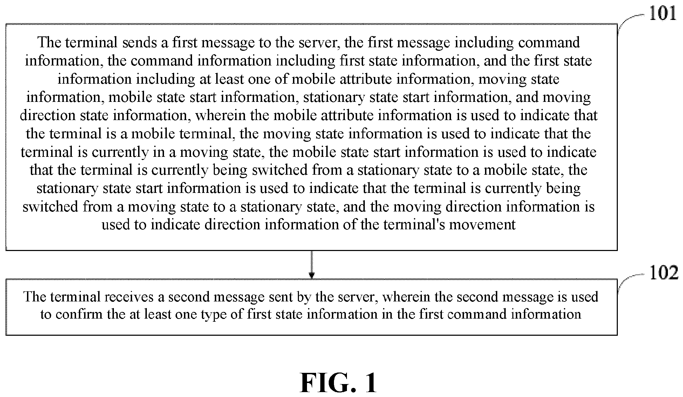

Referring to FIG. 1, a flow chart of Embodiment 1 of a method for communication between a terminal and a server according to the present application is shown, which may specifically include the following steps.

In Step 101, the terminal sends a first message to the server, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement.

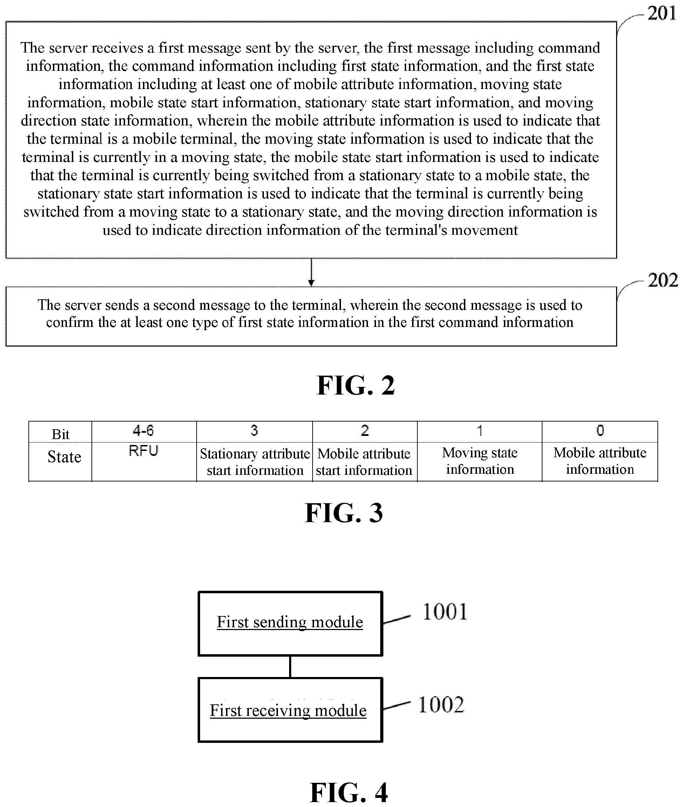

Specifically, the terminal is a LoRaWAN terminal. The server is a LoRaWAN server. The first message is any uplink data frame. The command information is a MAC Command. For example, the MAC command may be a terminal mobility indication (Device Mobility Indication, DevMobilityInd) command. The terminal mobility indication command may include one or more pieces of state information (StateInfo). FIG. 3 shows a payload part of a terminal mobility indication command. Bit 0 represents whether the terminal is a terminal with a mobile attribute. For example, if the value of bit 0 is 1, it indicates that the terminal is a terminal with a mobile attribute. For example, the mobile terminal may be a terminal with a mobile attribute such as a shared bicycle, a smart logistics vehicle, and an unmanned aerial vehicle. If the value of bit 0 is 0, it indicates that the terminal is a stationary terminal. Bit 1 represents whether the terminal is currently in a stationary state. If the value of bit 1 is 1, it indicates that the terminal is currently in a stationary state. In contrast, if the value of bit 1 is 0, it indicates that the terminal is currently in a mobile state. Bit 2 represents whether the terminal starts to move from being stationary. For example, if the value of bit 2 is 1, it indicates that the terminal will start to transition from a stationary state to a mobile state. In contrast, it indicates that the terminal will continue to remain stationary. When a network side learns that the terminal changes from a stationary state to a mobile state, the network side switches a scheduling strategy for the node, for example, adjusting power to the maximum to achieve maximum reliability and reduce energy saving requirements, or stopping dynamic scheduling of the node. Bit 3 indicates whether the terminal changes from moving to stationary. For example, if the value of bit 3 is 1, it indicates that the terminal will start to transition from a mobile state to a stationary state. The network side learns that the terminal changes from a mobile state to a stationary state, and the network side switches a scheduling strategy for the terminal, for example, adjusting power to the minimum according to a signal condition of the terminal and the network to achieve the minimum power consumption. Optionally, the state information represented by the bit value 1 or 0 may also be interchanged. For example, when the value of bit 0 is 0, it may also represent that the terminal is a mobile terminal. When the value of bit 0 is 1, it represents that the terminal is a stationary terminal. The present invention is not specifically limited thereto.

Optionally, the terminal mobility indication command may also include terminal moving speed information. For example, bits 4-5 in the above drawing may indicate moving speed information of the terminal. For example, when bits 4-5 are 00, it represents that the terminal is moving at a low speed. When bits 4-5 are 01, it indicates that the terminal is moving at a medium speed. When bits 4-5 are 10, it indicates that the terminal is moving at a high speed. After acquiring the moving speed of the terminal, the server may modify the scheduling strategy for the terminal. For example, when the terminal is in a low-speed state, a transmission period of uplink data frames for updating a downlink base station may be appropriately prolonged. When the terminal is in a medium-speed or high-speed state, the transmission period of uplink data frames for updating the downlink base station may be appropriately shortened.

Optionally, the terminal mobility indication command may also include moving direction information. For example, bits 4-5 in the above drawing may indicate terminal moving direction information. For example, when bits 4-5 are 00, it represents that the terminal is moving northward. When bits 4-5 are 01, it represents that the terminal is moving westward. When bits 4-5 are 10, it represents that the terminal is moving southward. When bits 4-5 are 11, it represents that the terminal is moving eastward. After acquiring the moving direction of the terminal, the server may modify the scheduling strategy for the terminal. For example, after acquiring the location information and moving direction information of the terminal, the server may predict a designated base station that can reach the terminal and send downlink data frames to the terminal through the base station.

Optionally, one terminal mobility indication command may include multiple pieces of state information. For example, in a payload part of the terminal mobility indication command, bits 0 and 2 are both set to 1, indicating that the terminal is a terminal with a mobile attribute, and the terminal will start to transition from a stationary state to a mobile state.

In the LoRa network, the terminal sends the first message to the server through at least one gateway. The gateway may also be referred to as a base station. The first message sent by the terminal may be received by multiple gateways and forwarded to a network server by the multiple gateways.

In the embodiment of the present application, the following sub-step may be included before the step 101.

In sub-step S1011, the first state information further includes time information about the upcoming transition to a stationary state and time information about the upcoming transition to a mobile state.

Specifically, the time information about the upcoming transition to a stationary state may be calculated in seconds. One bit may be used in the first state information to indicate whether the terminal will transition from a mobile state to a stationary state. Similarly, one bit may also be used in the first state information to indicate whether the terminal will transition from a stationary state to a mobile state. Optionally, the first state information may also include a piece of three-bit information for representing a time required to transition the state. For example, if the first state information carries the information that the terminal is about to transition from a stationary state to a mobile state, and a three-bit value corresponding to the time information is 001, it represents that the terminal will transition from the stationary state to the mobile state in 1 second. The time information may also be represented by more bits, for example, 4 bits. Optionally, each bit may also represent a different time measurement value. For example, the three-bit value corresponding to the time information being 001 may also represent 10 milliseconds. When the three-bit value is 010, it represents 20 milliseconds, and so on.

In the embodiment of the present application, the following sub-step may be included before the step 101.

In sub-step S1012, the command information may be included in a data frame overhead.

Specifically, the MAC command may be included in an overhead (payload) of a downlink data frame.

In the embodiment of the present application, the following sub-step may be included before the step 101.

In sub-step S1013, the command information may be included in an optional field of a data frame.

Specifically, the MAC command may be included in an optional field (FOpts) of an uplink data frame, and the terminal may read the state information related to the terminal mobility contained in the MAC command from the optional field of the uplink data frame.

In the embodiment of the present application, the following sub-step may be included before the step 101.

In sub-step S1014, the command information may be unencrypted.

Specifically, when the MAC command is included in an optional field (FOpts) of a data frame, it may be unencrypted.

In Step 102, the terminal receives a second message sent by the server, wherein the second message is used to confirm the at least one type of first state information in the command information.

Specifically, the second message may be a terminal mobility indication response message (Device Mobility Configuration, DevMobilityConf), and the response message carries confirmation information corresponding to state information on a response bit in the terminal mobility indication command. For example, in the payload of the terminal mobility indication command sent by the terminal to the server, bit 0 is set to 1, indicating that the terminal is a terminal with a mobile attribute. Subsequently, the terminal receives the terminal mobility indication response message sent by the server. The response message contains state information confirmation information. Each bit in the state information confirmation information represents a result of confirmation for state information of a corresponding location. For example, if the value of bit 0 in the state information confirmation information received by the terminal is 1, it represents that the server successfully confirms the state of the terminal. If the corresponding state information confirmation information received by the terminal is 0, it represents that the server fails to confirm the terminal state.

In the LoRa network, the server selects, according to a certain strategy, a gateway for sending a downlink message, and sends the second message to the terminal through the gateway. The strategy of the server for selecting a gateway for sending a downlink message may be that the gateway sends the received Received Signal Strength Indication (RSSI) information of the uplink message sent by the terminal to the network server, and the network server selects, according to the received RSSI information, a gateway with the strongest received signal strength, and sends the second message to the terminal through the gateway.

With this embodiment, the server can timely acquire the state information related to mobility of the terminal device, so that the server can adopt a corresponding network scheduling strategy when necessary, thus avoiding wasting network resources and improving the interaction efficiency between the terminal and the server.

Referring to FIG. 2, a flow chart of Embodiment 2 of a method for communication between a terminal and a server according to the present application is shown, which may specifically include the following steps:
In Step 201, the server receives a first message sent by the terminal, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement.

Specifically, the terminal is a LoRaWAN terminal. The server is a LoRaWAN server. The first message is any uplink data frame. The command information is a MAC Command. For example, the MAC command may be a terminal mobility indication (Device Mobility Indication, DevMobilityInd) command. The terminal mobility indication command may include one or more pieces of state information (StateInfo). FIG. 3 shows a payload part of the terminal mobility indication command. Bit 0 represents whether the terminal is a terminal with a mobile attribute. For example, if the value of bit 0 is 1, it indicates that the terminal is a mobile terminal. For example, the mobile terminal may be a terminal with a mobility requirement, such as a shared bicycle. If the value of bit 0 is 0, it indicates that the terminal is a stationary terminal. Bit 1 represents whether the terminal is currently in a stationary state. If the value of bit 1 is 1, it indicates that the terminal is currently in a stationary state. In contrast, if the value of bit 1 is 0, it indicates that the terminal is currently in a mobile state. Bit 2 represents whether the terminal starts to move from being stationary. For example, if the value of bit 2 is 1, it indicates that the terminal will start to transition from a stationary state to a mobile state. Otherwise, it indicates that the terminal will continue to remain stationary. When a network side learns that the terminal has changed from the stationary state to the mobile state, the network side switches a scheduling strategy for the node, for example, adjusting power to the maximum to achieve maximum reliability and reduce energy saving requirements, or stopping dynamic scheduling of the node. Bit 3 indicates whether the terminal changes from moving to stationary. For example, if the value of bit 3 is 1, it indicates that the terminal will start to transition from a mobile state to a stationary state. The network side learns that the terminal changes from a mobile state to a stationary state, and the network side switches a scheduling strategy for the terminal, for example, adjusting power to the minimum according to a signal condition of the terminal and the network to achieve the minimum power consumption. Optionally, the state information represented by the bit value 1 or 0 may also be interchanged. For example, when the value of bit 0 is 0, it may also represent that the terminal is a mobile terminal. When the value of bit 0 is 1, it represents that the terminal is a stationary terminal. The present invention is not specifically limited thereto.

In the embodiment of the present application, the following sub-step may be included before the step 201.

In sub-step S2011, the command information further includes time information about the upcoming transition to a stationary state and time information about the upcoming transition to a mobile state.

Specifically, the time information about the upcoming transition to a stationary state may be calculated in seconds. One bit may be used in the first state information to indicate whether the terminal will transition from a mobile state to a stationary state. Similarly, one bit may also be used in the first state information to indicate whether the terminal will transition from a stationary state to a mobile state. Optionally, the first state information may also include a piece of three-bit information for representing a time required to transition the state. For example, if the first state information carries the information that the terminal is about to transition from a stationary state to a mobile state, and a three-bit value corresponding to the time information is 001, it represents that the terminal will transition from the stationary state to the mobile state in 1 second. The time information may also be represented by more bits, for example, 4 bits. Optionally, each bit may also represent a different time measurement value. For example, the three-bit value corresponding to the time information being 001 may also represent 10 milliseconds. When the three-bit value is 010, it represents 20 milliseconds, and so on.

In the embodiment of the present application, the following sub-step may be included before the step 201.

In sub-step S2012, the server updates corresponding second state information according to the first state information, wherein the second state information is used for the server to perform a network scheduling operation.

Specifically, the second state information is state information of the terminal recorded by the server. The second state information may also include at least one of mobile attribute information, stationary attribute information, moving state information, stationary state information, mobile state start information, stationary state start information, and moving direction state information. After updating the state information, the server may perform a specific network scheduling operation according to the updated state information. For example, when the network server learns that the terminal changes from a stationary state to a mobile state, the server may switch the scheduling strategy for the node, adjust the power to the maximum to achieve the maximum reliability and reduce energy saving requirements, or stop dynamic scheduling for the node. When the network side learns that the terminal changes from a mobile state to a stationary state, the network side switches the scheduling strategy for the node, for example, adjusting power to the minimum according to a signal condition of the terminal and the network to achieve the minimum power consumption. When the network server acquires that the terminal is a terminal with a mobile attribute, the network server may allocate a specific downlink channel to the terminal, so that the terminal can also use the channel to receive downlink data frames sent by other base stations when it moves to other base stations.

In the embodiment of the present application, the step 201 may include the following sub-step. In sub-step S2013, the command information may be included in a data frame overhead.

Specifically, the MAC command may be included in an overhead (payload) of a downlink data frame.

In the embodiment of the present application, the step 201 may include the following sub-step.

In sub-step S2014, the command information may be included in an optional field of a data frame.

Specifically, the MAC command may be included in an optional field (FOpts) of an uplink data frame, and the terminal may read the state information related to the terminal mobility contained in the MAC command from the optional field of the uplink data frame.

In the embodiment of the present application, the step 201 may include the following sub-step.

In sub-step S2014, the command information may be unencrypted.

Specifically, when the MAC command is included in an optional field (FOpts) of a data frame, it may be unencrypted.

In Step 202, the server sends a second message to the terminal, wherein the second message is used to confirm the at least one type of first state information in the command information.

Specifically, the second message may be a terminal mobility indication response message (Device Mobility Configuration, DevMobilityConf), and the response message carries confirmation information corresponding to state information on a response bit in the terminal mobility indication command. For example, in the payload of the terminal mobility indication command sent by the terminal to the server, bit 0 is set to 1, indicating that the terminal is a terminal with a mobile attribute. Subsequently, the terminal receives the terminal mobility indication response message sent by the server. The response message contains state information confirmation information. Each bit in the state information confirmation information represents a result of confirmation for state information of a corresponding location. For example, if the value of bit 0 in the state information confirmation information received by the terminal is 1, it represents that the server successfully confirms the state of the terminal. If the corresponding state information confirmation information received by the terminal is 0, it represents that the server fails to confirm the terminal state.

With this embodiment, the server can timely acquire the state information related to mobility of the terminal device, so that the server can adopt a corresponding network scheduling strategy when necessary, thus avoiding wasting network resources and improving the interaction efficiency between the terminal and the server.

Referring to FIG. 4, an apparatus diagram of Embodiment 3 of a terminal according to the present application is shown, which may specifically include the following steps.

A first sending module 1001 is configured to send a first message to the server, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement.

Specifically, the terminal is a LoRaWAN terminal. The server is a LoRaWAN server. The first message is any uplink data frame. The command information is a MAC Command. For example, the MAC command may be a terminal mobility indication (Device Mobility Indication, DevMobilityInd) command. The terminal mobility indication command may include one or more pieces of state information (StateInfo). FIG. 3 shows a payload part of the terminal mobility indication command. Bit 0 represents whether the terminal is a terminal with a mobile attribute. For example, if the value of bit 0 is 1, it indicates that the terminal is a mobile terminal. For example, the mobile terminal may be a terminal with a mobility requirement, such as a shared bicycle. If the value of bit 0 is 0, it indicates that the terminal is a stationary terminal. Bit 1 represents whether the terminal is currently in a stationary state. If the value of bit 1 is 1, it indicates that the terminal is currently in a stationary state. In contrast, if the value of bit 1 is 0, it indicates that the terminal is currently in a mobile state. Bit 2 represents whether the terminal starts to move from being stationary. For example, if the value of bit 2 is 1, it indicates that the terminal will start to transition from a stationary state to a mobile state. Otherwise, it indicates that the terminal will continue to remain stationary. When a network side learns that the terminal has changed from the stationary state to the mobile state, the network side switches a scheduling strategy for the node, for example, adjusting power to the maximum to achieve maximum reliability and reduce energy saving requirements, or stopping dynamic scheduling of the node. Bit 3 indicates whether the terminal changes from moving to stationary. For example, if the value of bit 3 is 1, it indicates that the terminal will start to transition from a mobile state to a stationary state. The network side learns that the terminal changes from a mobile state to a stationary state, and the network side switches a scheduling strategy for the terminal, for example, adjusting power to the minimum according to a signal condition of the terminal and the network to achieve the minimum power consumption. Optionally, the state information represented by the bit value 1 or 0 may also be interchanged. For example, when the value of bit 0 is 0, it may also represent that the terminal is a mobile terminal. When the value of bit 0 is 1, it represents that the terminal is a stationary terminal. The present invention is not specifically limited thereto.

Optionally, the terminal mobility indication command may also include terminal moving speed information. For example, bits 4-5 in the above drawing may indicate moving speed information of the terminal. For example, when bits 4-5 are 00, it represents that the terminal is moving at a low speed. When bits 4-5 are 01, it indicates that the terminal is moving at a medium speed. When bits 4-5 are 10, it indicates that the terminal is moving at a high speed. After acquiring the moving speed of the terminal, the server may modify the scheduling strategy for the terminal. For example, when the terminal is in a low-speed state, a transmission period of uplink data frames for updating a downlink base station may be appropriately prolonged. When the terminal is in a medium-speed or high-speed state, the transmission period of uplink data frames for updating the downlink base station may be appropriately shortened.

Optionally, the terminal mobility indication command may also include moving direction information. For example, bits 4-5 in the above drawing may indicate terminal moving direction information. For example, when bits 4-5 are 00, it represents that the terminal is moving northward. When bits 4-5 are 01, it represents that the terminal is moving westward. When bits 4-5 are 10, it represents that the terminal is moving southward. When bits 4-5 are 11, it represents that the terminal is moving eastward. After acquiring the moving direction of the terminal, the server may modify the scheduling strategy for the terminal. For example, after acquiring the location information and moving direction information of the terminal, the server may predict a designated base station that can reach the terminal and send downlink data frames to the terminal through the base station.

Optionally, one terminal mobility indication command may include multiple pieces of state information. For example, in a payload part of the terminal mobility indication command, bits 0 and 2 are both set to 1, indicating that the terminal is a terminal with a mobile attribute, and the terminal will start to transition from a stationary state to a mobile state.

A first receiving module 1002 is configured to receive a second message sent by the server, wherein the second message is used to confirm the at least one type of first state information in the command information.

Specifically, the second message may be a terminal mobility indication response message (Device Mobility Configuration, DevMobilityConf), and the response message carries confirmation information corresponding to state information on a response bit in the terminal mobility indication command. For example, in the payload of the terminal mobility indication command sent by the terminal to the server, bit 0 is set to 1, indicating that the terminal is a terminal with a mobile attribute. Subsequently, the terminal receives the terminal mobility indication response message sent by the server. The response message contains state information confirmation information. Each bit in the state information confirmation information represents a result of confirmation for state information of a corresponding location. For example, if the value of bit 0 in the state information confirmation information received by the terminal is 1, it represents that the server successfully confirms the state of the terminal. If the corresponding state information confirmation information received by the terminal is 0, it represents that the server fails to confirm the terminal state.

With this embodiment, the server can timely acquire the state information related to mobility of the terminal device, so that the server can adopt a corresponding network scheduling strategy when necessary, thus avoiding wasting network resources and improving the interaction efficiency between the terminal and the server.

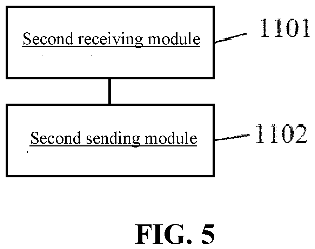

Referring to FIG. 5, an apparatus diagram of Embodiment 3 of a server according to the present application is shown, which may specifically include the following steps.

A second receiving module 1101 is configured to receive a first message sent by a terminal, the first message including command information, the command information including first state information, and the first state information including at least one of mobile attribute information, stationary attribute information, moving state information, stationary state information, mobile state start information, stationary state start information, and moving direction state information, wherein the mobile attribute information is used to indicate that the terminal is a mobile terminal, the stationary attribute information is used to indicate that the terminal is a stationary terminal, the moving state information is used to indicate that the terminal is currently in a mobile state, the stationary state information is used to indicate that the terminal is currently in a stationary state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement.

Specifically, the terminal is a LoRaWAN terminal. The server is a LoRaWAN server. The first message is any uplink data frame. The command information is a MAC Command. For example, the MAC command may be a terminal mobility indication (Device Mobility Indication, DevMobilityInd) command. The terminal mobility indication command may include one or more pieces of state information (StateInfo). FIG. 3 shows a payload part of the terminal mobility indication command. Bit 0 represents whether the terminal is a terminal with a mobile attribute. For example, if the value of bit 0 is 1, it indicates that the terminal is a mobile terminal. For example, the mobile terminal may be a terminal with a mobility requirement such as a shared bicycle. If the value of bit 0 is 0, it indicates that the terminal is a stationary terminal. Bit 1 represents whether the terminal is currently in a stationary state. If the value of bit 1 is 1, it indicates that the terminal is currently in a stationary state. In contrast, if the value of bit 1 is 0, it indicates that the terminal is currently in a mobile state. Bit 2 represents whether the terminal starts to move from being stationary. For example, if the value of bit 2 is 1, it indicates that the terminal will start to transition from a stationary state to a mobile state. Otherwise, it indicates that the terminal will continue to remain stationary. When a network side learns that the terminal has changed from the stationary state to the mobile state, the network side switches a scheduling strategy for the node, for example, adjusting power to the maximum to achieve maximum reliability and reduce energy saving requirements, or stopping dynamic scheduling of the node. Bit 3 indicates whether the terminal changes from moving to stationary. For example, if the value of bit 3 is 1, it indicates that the terminal will start to transition from a mobile state to a stationary state. The network side learns that the terminal changes from a mobile state to a stationary state, and the network side switches a scheduling strategy for the terminal, for example, adjusting power to the minimum according to a signal condition of the terminal and the network to achieve the minimum power consumption. Optionally, the state information represented by the bit value 1 or 0 may also be interchanged. For example, when the value of bit 0 is 0, it may also represent that the terminal is a mobile terminal. When the value of bit 0 is 1, it represents that the terminal is a stationary terminal. The present invention is not specifically limited thereto.

Optionally, the terminal mobility indication command may also include terminal moving speed information. For example, bits 4-5 in the above drawing may indicate moving speed information of the terminal. For example, when bits 4-5 are 00, it represents that the terminal is moving at a low speed. When bits 4-5 are 01, it indicates that the terminal is moving at a medium speed. When bits 4-5 are 10, it indicates that the terminal is moving at a high speed. After acquiring the moving speed of the terminal, the server may modify the scheduling strategy for the terminal. For example, when the terminal is in a low-speed state, a transmission period of uplink data frames for updating a downlink base station may be appropriately prolonged. When the terminal is in a medium-speed or high-speed state, the transmission period of uplink data frames for updating the downlink base station may be appropriately shortened.

Optionally, the terminal mobility indication command may also include moving direction information. For example, bits 4-5 in the above drawing may indicate terminal moving direction information. For example, when bits 4-5 are 00, it represents that the terminal is moving northward. When bits 4-5 are 01, it represents that the terminal is moving westward. When bits 4-5 are 10, it represents that the terminal is moving southward. When bits 4-5 are 11, it represents that the terminal is moving eastward. After acquiring the moving direction of the terminal, the server may modify the scheduling strategy for the terminal. For example, after acquiring the location information and moving direction information of the terminal, the server may predict a designated base station that can reach the terminal and send downlink data frames to the terminal through the base station.

Optionally, one terminal mobility indication command may include multiple pieces of state information. For example, in a payload part of the terminal mobility indication command, bits 0 and 2 are both set to 1, indicating that the terminal is a terminal with a mobile attribute, and the terminal will start to transition from a stationary state to a mobile state.

A second sending module 1102 is configured to send a second message, wherein the second message is used to confirm the at least one type of first state information in the command information.

Specifically, the second message may be a terminal mobility indication response message (Device Mobility Configuration, DevMobilityConf), and the response message carries confirmation information corresponding to state information on a response bit in the terminal mobility indication command. For example, in the payload of the terminal mobility indication command sent by the terminal to the server, bit 0 is set to 1, indicating that the terminal is a terminal with a mobile attribute. Subsequently, the terminal receives the terminal mobility indication response message sent by the server. The response message contains state information confirmation information. Each bit in the state information confirmation information represents a result of confirmation for state information of a corresponding location. For example, if the value of bit 0 in the state information confirmation information received by the terminal is 1, it represents that the server successfully confirms the state of the terminal. If the corresponding state information confirmation information received by the terminal is 0, it represents that the server fails to confirm the terminal state.

With this embodiment, the server can timely acquire the state information related to mobility of the terminal device, so that the server can adopt a corresponding network scheduling strategy when necessary, thus avoiding wasting network resources and improving the interaction efficiency between the terminal and the server.

The apparatus embodiment is basically similar to the method embodiment, so that it is described simply, and for related parts, reference may be made to the description of the parts in the method embodiment.

An apparatus is further provided in an embodiment of the present application, including:
one or more processors; and
one or more machine-readable media having instructions stored thereon, wherein the instructions, when executed by the one or more processors, cause the apparatus to perform the method described in the embodiments of the present application.

One or more machine-readable media having instructions stored thereon are further provided in an embodiment of the present application, wherein the instructions, when executed by one or more processors, cause an apparatus to perform the method described in the embodiments of the present application.

The embodiments in this specification are all described in a progressive manner. Each embodiment focuses on the differences from other embodiments, and for the same or similar parts between the embodiments, reference can be made to each other.

Those skilled in the art should understand that embodiments of the embodiments of the present application can be provided as a method, an apparatus, or a computer program product. Therefore, the embodiments of the present application may be in the form of a complete hardware embodiment, a complete software embodiment, or an embodiment combining software and hardware. Moreover, the embodiments of the present application can be in the form of a computer program product implemented on one or more computer-usable storage media (including, but not limited to, a magnetic disk memory, a CD-ROM, an optical memory, and the like) including computer-usable program code.

The embodiments of the present application are described with reference to flow charts and/or block diagrams of methods, terminal devices (systems), and computer program products according to the embodiments of the present application. It should be understood that each flow and/or block in the flow charts and/or block diagrams and a combination of flows and/or blocks in the flow charts and/or block diagrams may be implemented by computer program instructions. These computer program instructions can be provided to a processor of a general-purpose computer, a special-purpose computer, an embedded processor, or another programmable data processing terminal device to produce a machine, so that the instructions executed by the processor of the computer or another programmable data processing terminal device produce an apparatus for realizing the functions specified in one or more flows of the flow charts and/or one or more blocks of the block diagrams.

These computer program instructions may also be stored in a computer-readable memory that can direct a computer or another programmable data processing terminal device to work in a specific manner, so that the instructions stored in this computer-readable memory produce an article of manufacture including an instruction apparatus which implements the functions specified in one or more flows of the flow charts and/or one or more blocks of the block diagrams.

These computer program instructions can also be loaded onto a computer or another programmable data processing terminal device, so that a series of operation steps are performed on the computer or another programmable terminal device to produce computer-implemented processing, so that the instructions executed on the computer or another programmable terminal device provide steps for implementing the functions specified in one or more flows of the flow charts and/or one or more blocks of the block diagrams.

Although the preferred embodiments of the embodiments of the present application have been described, those skilled in the art can make additional changes and modifications to the embodiments once they learn the basic creative concept. Therefore, the appended claims are intended to be interpreted as including the preferred embodiments and all changes and modifications falling within the scope of the embodiments of the present application.

Finally, it should be further noted that, in this article, relational terms such as first and second are used only to distinguish one entity or operation from another entity or operation, and do not necessarily require or imply that there is any such actual relationship or sequence between the entities or operations. Moreover, the terms "comprise," "include," or any other variations thereof are intended to cover non-exclusive inclusion, so that a process, method, item, or terminal device including a series of elements not only includes the elements, but also includes other elements not clearly listed, or further includes elements inherent to the process, method, item, or terminal device. In the absence of more limitations, an element defined by "including a/an ... " does not exclude that the process, method, item, or terminal device including the element further has other identical elements.

An information synchronization method and an apparatus for communication between a terminal and a server provided in the present application are introduced in detail above, and the principles and implementations of the present application are described by applying specific examples in this article. The above descriptions of the embodiments are used only to help understand the method of the present application and core ideas thereof. Meanwhile, for those of ordinary skill in the art, there may be modifications to the specific implementations and application scopes according to the idea of the present application. Based on the above, the content of this specification should not be construed as limiting the present application.

## Claims

1. A method for communication between a terminal and a server, comprising:
sending, by the terminal, a first message to the server, the first message comprising command information, the command information comprising first state information, and the first state information comprising at least one of mobile attribute information, moving state information, mobile state start information, stationary state start information, and moving direction state information, wherein the mobile attribute information is used to indicate that the terminal is a mobile terminal, the moving state information is used to indicate that the terminal is currently in a mobile state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
receiving, by the terminal, a second message sent by the server, wherein the second message is used to confirm the at least one type of first state information in the command information.

2. The method according to claim 1, further comprising that:
the first state information further comprises time information about the upcoming transition to a stationary state and time information about the upcoming transition to a mobile state.

3. The method according to claim 1, further comprising that:
the command information may be comprised in a data frame overhead.

4. The method according to claim 1, further comprising that:
the command information may be comprised in an optional field of a data frame.

5. The method according to claim 1, further comprising that:
the command information may be unencrypted.

6. A method of communication between a terminal and a server, comprising:
receiving, by the server, a first message sent by the terminal, the first message comprising command information, the command information comprising first state information, and the first state information comprising at least one of mobile attribute information, moving state information, mobile state start information, stationary state start information, and moving direction state information, wherein the mobile attribute information is used to indicate that the terminal is a mobile terminal, the moving state information is used to indicate that the terminal is currently in a mobile state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
sending, by the server, a second message to the terminal, wherein the second message is used to confirm the at least one type of first state information in the command information.

7. The method according to claim 6, further comprising that:
the command information further comprises time information about the upcoming transition to a stationary state and time information about the upcoming transition to a mobile state.

8. The method according to claim 6, wherein the server receives the first message sent by the terminal, the command information comprises the first state information, and the method further comprises:
updating, by the server, corresponding second state information according to the first state information, wherein the second state information is used for the server to perform a network scheduling operation.

9. The method according to claim 6, further comprising that:
the command information may be comprised in a data frame overhead.

10. The method according to claim 6, further comprising that:
the command information may be comprised in an optional field of a data frame.

11. The method according to claim 6, further comprising that:
the command information may be unencrypted.

12. A terminal, comprising:
a first sending module configured to send a first message to a server, the first message comprising command information, the command information comprising first state information, and the first state information comprising at least one of mobile attribute information, moving state information, mobile state start information, stationary state start information, and moving direction state information, wherein the mobile attribute information is used to indicate that the terminal is a mobile terminal, the moving state information is used to indicate that the terminal is currently in a mobile state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
a first receiving module configured to receive a second message sent by the server, wherein the second message is used to confirm the at least one type of first state information in the command information.

13. The terminal according to claim 12, further comprising that:
the command information further comprises time information about the upcoming transition to a stationary state and time information about the upcoming transition to a mobile state.

14. The terminal according to claim 12, further comprising that:
the command information may be comprised in a data frame overhead.

15. The terminal according to claim 12, further comprising that:
the command information may be comprised in an optional field of a data frame.

16. The terminal according to claim 12, further comprising that:
the command information may be unencrypted.

17. A server, comprising:
a second receiving module configured to receive a first message sent by a terminal, the first message comprising command information, the command information comprising first state information, and the first state information comprising at least one of mobile attribute information, moving state information, mobile state start information, stationary state start information, and moving direction state information, wherein the mobile attribute information is used to indicate that the terminal is a mobile terminal, the moving state information is used to indicate that the terminal is currently in a mobile state, the mobile state start information is used to indicate that the terminal is currently being switched from a stationary state to a mobile state, the stationary state start information is used to indicate that the terminal is currently being switched from a mobile state to a stationary state, and the moving direction information is used to indicate direction information of the terminal's movement; and
a second sending module configured to send a second message, wherein the second message is used to confirm the at least one type of first state information in the command information.

18. The server according to claim 17, further comprising that:
the command information further comprises time information about the upcoming transition to a stationary state and time information about the upcoming transition to a mobile state.

19. The server according to claim 17, further comprising a processing module located in the server and configured for the server to update corresponding second state information according to the first state information in the first message after the server receives the first message sent by the terminal, wherein the second state information is used for the server to perform a network scheduling operation.

20. The server according to claim 17, further comprising that:
the command information may be comprised in a data frame overhead.

21. The server according to claim 17, further comprising that:
the command information may be comprised in an optional field of a data frame.

22. The server according to claim 17, further comprising that:
the command information may be unencrypted.

23. One or more machine-readable media having instructions stored thereon, wherein the instructions, when executed by one or more processors, cause an apparatus to perform one or more of the methods according to claims 1 to 5 or claims 6 to 11.
